# EUROPÄISCHE PATENTSCHRIFT

(11) **EP 1 236 529 B1**
(45) Veröffentlichungstag und Bekanntmachung des Hinweises auf die Patenterteilung: **13.10.2004**
(21) Anmeldenummer: 02000188.9
(22) Anmeldetag: 10.01.2002
(51) Int. Cl.: B23D 21/10

(54) **Trenngerät für Rohre**
Cutting off apparatus for pipes
Appareil à sectionner pour conduits

(30) Priorität: 28.02.2001 DE 20103481 U
(43) Veröffentlichungstag der Anmeldung: 04.09.2002
(73) Patentinhaber: Rothenberger AG, 65779 Kelkheim (DE)
(72) Erfinder: Hellebrandt, Gerhard, 65843 Sulzbach (DE); Wagner, Ewald, 65520 Bad Camberg-Würges (DE)
(74) Vertreter: Zapfe, Hans, Dipl.-Ing.

(56) Entgegenhaltungen:
- EP-A- 0 672 493
- US-A- 4 268 959

## Beschreibung

Die Erfindung betrifft ein Trenngerät für Rohre mit einer Rotationsführung zum Führen des Trenngeräts um die Rohroberfläche und um eine Achse, mit einer an der Rotationsführung angeordneten Radialführung für einen Werkzeugträger, der mit einem Trennwerkzeug und einem Anfaswerkzeug versehen und mittels einer Gewindespindel in Richtung auf die Achse und in Gegenrichtung verstellbar ist.

Derartige Trenngeräte sind seit langem bekannt, wie der nachstehend abgehandelte Stand der Technik zeigt, sie sind jedoch für die Herstellung einer definierten Anfasung an der Innenseite der kreisringförmigen Schnittfläche des Rohres weder vorgesehen noch geeignet. Eine solche Innenanfasung ist jedoch für Zwecke der Herstellung von Rohrverbindungen erwünscht, einmal zum Entfernen der unvermeidlichen Schneidgrats zum anderen aber zum Herstellen genau definierter Innenanfasungen mit konstanter Breite. Eine besondere Bedeutung hat der Erfindungsgegenstand bei der Innenanfasung von sogenannten Verbundrohren, die einen hohlzylindrischen metallischen Kern sowie eine Innen- und eine Außenbeschichtung aus Kunststoff besitzen.

Durch die US 4 063 355, das DE 78 11 884 U, das DE 78 11 885 U, die WO 81/00225, die DE 31 36 406 C2, die US 4 845850 und die EP 0 672 493 B1 sind Trenngeräte für Rohre bekannt, bei denen das Trennwerkzeug mittels einer Rotationsführung um die Rohrachse herum führbar ist und bei denen der Trennvorgang durch allmählichen radialen Vorschub des Trennwerkzeugs in das Rohr abgetrennt wird. Für den radialen Vorschub dient eine Radialführung für einen Werkzeughalter und eine manuell betätigbare Vorschubspindel und/oder eine Druckfeder.

Die Rotationsführung wird dabei durch einen Führungsring gebildet, der mittels einer diametral geteilten Spannvorrichtung mit zwei Halbschalen auf der Rohroberfläche gehalten wird. die Radialführung ist dabei um die Rohrachse drehbar auf dem Führungsring gelagert.

In der US 4 063 355 und der WO 81/00225 sind als Trennwerkzeuge Schneidrollen offenbart, mit denen keine Anfasungen der Schnittkanten möglich sind.

Durch das DE 78 11 885 U ist es bekannt, ein plättchenförmiges Trennwerkzeug mit einer Abstechschneide und einer Anfasschneide zu versehen, die durch Umstecken des Werkzeughalters nach Drehung um 90 Grad um seine eigene Achse nacheinander zur Einwirkung gebracht werden können.

Durch die US 4 845 850, die DE 31 36 406 C2 und die EP 0 672 493 B1 ist es bekannt, plättchenförmige Trennwerkzeuge mit einer Abstechschneide und einer Anfasschneide zu versehen, die ein einer gemeinsamen Ebene liegen, so daß die Schneiden ohne Umstecken des Werkzeughalters allein durch Vergrößerung der Eindringtiefe nacheinander zur Einwirkung gebracht werden können.

Mit allen bekannten Anfasschneiden ist es jedoch nur möglich, die Außenkanten der kreisringförmigen Schnittflächen anzufasen, nicht jedoch deren Innenkanten.

Durch das DE 78 11 884 U ist es ferner bekannt, im unterteilten und hohlen Drehgriff der Vorschubspindel eines Werkzeugs mit einer Abstech- und einer Anfasschneide ein kurbelförmiges Entgratungswerkzeug anzuordnen. Mit der Anfasschneide können jedoch nur Außenfasen hergestellt werden. Das Entgratungswerkzeug, das wie ein Dreikantschaber ausgebildet und speziell für eine Innenentgratung vorgesehen ist, ist jedoch bei seinem Einsatz nicht mit dem Werkzeugträger verbunden und muß - nach dem Herausnehmen aus dem Drehgriff einzeln und von Hand bedient werden. Damit ist jedoch nur die Entfernung eines geringen Schneidgrates möglich, nicht aber die Herstellung einer ausgeprägten Fase mit gleichbleibender Breite, weil die Koppelung mit dem Werkzeugträger und der Zwangrückzug mittels der Vorschubspindel fehlen.

Der Erfindung liegt demgegenüber die Aufgabe zugrunde, ein Trenngerät der eingangs beschriebenen Gattung anzugeben, mit dem nach dem Ablängen bzw. dem Entfernen der überschüssigen Rohrlänge auch eine Innenanfasung der kreisringförmigen Schnittflächen möglich ist.

Die Lösung der gestellten Aufgabe erfolgt bei dem Trenngerät der eingangs beschriebenen Gattung erfindungsgemäß dadurch, daß der Werkzeugträger eine zusätzliche Radialführung für das Anfaswerkzeug besitzt, mit der das Anfaswerkzeug relativ zum Werkzeugträger von einer Stellung außerhalb der Rohroberfläche in eine Stellung innerhalb des Rohres und in Gegenrichtung zum Herstellen einer inneren Anfasung verstellbar ist.

Mit einer solchen Lösung wird die gestellte Aufgabe in vollem Umfange gelöst, insbesondere wird ein Trenngerät der eingangs beschriebenen Gattung angegeben, mit dem nach dem Ablängen bzw. dem Entfernen der überschüssigen Rohrlänge auch eine Innenanfasung der kreisringförmigen Schnittflächen mit dem gleichen Gerät und ohne getrennte Zusatzwerkzeuge möglich ist.

Es ist dabei im Zuge weiterer Ausgestaltungen der Erfindung besonders vorteilhaft, wenn - entweder einzeln oder in Kombination -:
* die zusätzliche Radialführung einen drehbaren Führungszapfen besitzt, an dem das Anfaswerkzeug radial abstehend befestigt ist und der eine Stellschraube für die Führung und Arretierung des Führungszapfens gegenüber der Radialführung aufweist, und wenn die Radialführung eine Kulisse für die Führung der Stellschraube in radialer Richtung und in Umfangsrichtung aufweist,
* die Kulisse zwei Schenkel aufweist, von denen der erste Schenkel parallel zur Verschieberichtung des Führungzapfens und der zweite Schenkel rechtwinklig und bogenförmig gekrümmt zum ersten Schenkel verläuft und an einer Stelle angeordnet ist, an der das Anfaswerkzeug in den offenen lichten Rohrquerschnitt einschwenkbar ist,
* das Trennwerkzeug als Schneidrolle mit einer Schneidkante ausgebildet ist und wenn das Anfaswerkzeug in ausgeschwenkter Stellung über die Schneidrolle vorschiebbar und zurückziehbar ist und in radial einwärts vorgeschobener und in den offenen Rohrquerschnitt eingeschwenkter Stellung die Schneidkante übergreift,
* am Werkzeugträger ein Schutzgehäuse befestigt ist, in das das Anfaswerkzeug zurückziehbar ist,
* der Werkzeugträger einen Führungsteil besitzt, mit dem der Werkzeugträger in der hierzu komplementären Radialführung geführt ist,
* der Führungsteil T-förmig ausgebildet ist,
* die Rückzugsbewegung des gegenüber dem Werkzeugträger arretierten Anfaswerkzeugs beim Anfasen mittels der Gewindespindel für den Antrieb des Werkzeugträgers herbeiführbar ist und/oder, wenn
* zwischen dem Werkzeugträger und seiner Radialführung eine Skalierung und ein Bezugspunkt angeordnet sind, durch die eine Vorgabe der Rohrdurchmesser und der Breite der Anfasung herbeiführbar ist.

Die Rotationsführung kann auf verschiedene Weise ausgeführt sein. Anstelle der in der Detailbeschreibung angegebenen Ringführung kann auch eine Rotationsführung mit mehreren auf den Umfang verteilten Rollen oder Walzen verwendet werden, die unmittelbar auf der Rohroberfläche abrollen und von denen mindestens eine gegenüber den anderen zum Zwecke einer Klemmung radial verstellbar ist.

Ferner können anstelle der in der Detailbeschreibung angegebenen Schneidrolle auch andere Trennwerkzeuge verwendet werden, beispielsweise solche nach dem Stand der Technik mit einer Trennschneide und einer Anfasschneide für eine zusätzliche Außenanfasung. Die Schneidrollen sind jedoch bevorzugt dann anzuwenden, wenn es sich um beschichtete Metallrohre und/oder Rohre aus Flachmaterial mit einer Schweißnaht oder Falznaht handelt. In solchen Fällen neigt ein Abstechstahl zum "Hängenbleiben" und/oder zu einer Verformung des Rohres, insbesondere dann, wenn es sich um sehr dünnwandige Rohre handelt, wie sie für Fallrohre von Dachentwässerungen verwendet werden. Die Schneidrolle ist frei von solchen Problemen.

Weitere Vorteile sind in der nachfolgenden Detailbeschreibung angegeben.

Ein Ausführungsbeispiel des Erfindungsgegenstandes wird nachfolgend anhand der Figuren 1 bis 7 näher erläutert.

Es zeigen:
- Figur 1: eine Draufsicht auf das Trenngerät in Richtung der Geräteachse A-A, die mit der Rohrachse zusammenfällt,
- Figur 2: einen teilweisen Axialschnitt durch das Trenngerät entlang der Ebene E-E in Figur 1,
- Figur 3: eine teilweise geschnittene Seitenansicht des Werkzeugträgers mit Trennwerkzeug und eingezogenem Anfaswerkzeug in Richtung des Pfeils P1 in Figur 1,
- Figur 4: eine Draufsicht auf den Werkzeugträger nach Figur 3,
- Figur 5: eine teilweise geschnittene rückseitige Ansicht des Werkzeugträgers nach den Figuren 3 und 4 in Richtung des Pfeils P2 in Figur 3,
- Figur 6: eine perspektivische Darstellung des Werkzeugträgers nach den Figuren 3 bis 5, jedoch mit ausgefahrenem Anfaswerkzeug, und
- Figur 7: eine vergrößerte Seitenansicht des Werkzeugträgers nach Figur 6 und einen Ausschnitt aus einem Rohr nach der Anfasung.

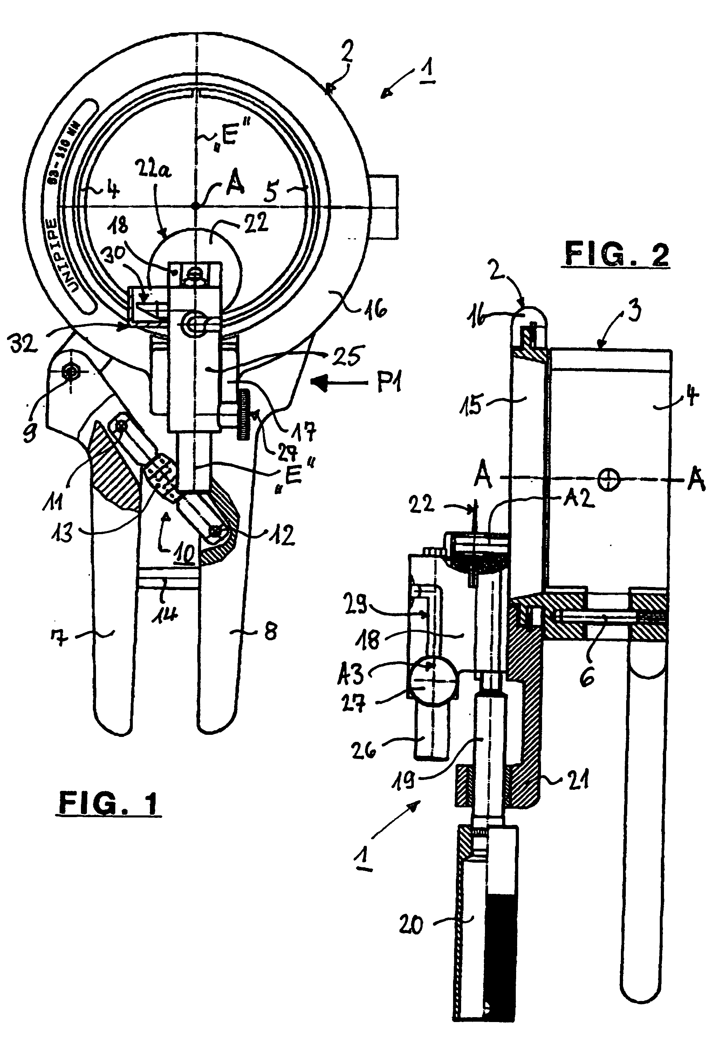

In den Figuren 1 und 2 ist ein Trenngerät 1 mit einer Rotationsführung 2 gezeigt, die eine diametral geteilte Spannvorrichtung 3 mit zwei Halbschalen 4 und 5 besitzt, die über einen Gelenkzapfen 6 miteinander verbunden sind. Die Klemmung auf der Rohroberfläche erfolgt über zwei Handgriffe 7 und 8, von denen der eine Handgriff 7 über einen Gelenkzapfen 9 mit der Halbschale 4 und der andere Handgriff 8 starr mit der Halbschale 5 verbunden ist. Die Klemmung erfolgt mittels eines einstellbaren Kniehebels 10 und zweier Gelenkzapfen 11 und 12. Der Kniehebel 10 ist unterteilt, und die Klemmkraft kann mittels einer Gewindehülse 13 eingestellt werden, die zwei Innengewinde mit entgegengesetzten Steigungen besitzt. Um den Kniehebel 10 gegenüber dem Gewindezapfen 9 in der durchgedrückten Stellung zu halten, ist an einem der Handgriffe ein Distanzbolzen 14 angebracht. Insofern ist das Gerät in der US 4 845 850 beschrieben.

Die eine der beiden Halbschalen 4 und 5 ist starr mit einem ungeteilten Führungsring 15 verbunden, auf dem ein Drehring 16 geführt ist. Der Drehring 16 ist wiederum starr mit einer Radialführung 17 verbunden, in der ein Werkzeugträger 18 wie ein Schlitten verschiebbar geführt ist. Wie in Figur 2 gezeigt ist, erfolgt die Verschiebung des Werkzeugträgers 18 in beiden Richtungen mittels einer Gewindespindel 19 und eines Drehgriffs 20, wobei die Gewindespindel 19 in einem Ausleger 21 des Drehrings 16 gelagert ist. Diese Teile sind in Figur 1 der Übersichtlichkeit halber weggelassen. Auch insoweit ist das Gerät - mit Ausnahme des Werkzeugträgers 18 und seiner angepaßten Radialführung 17 - in der US 4 845 850 beschrieben.

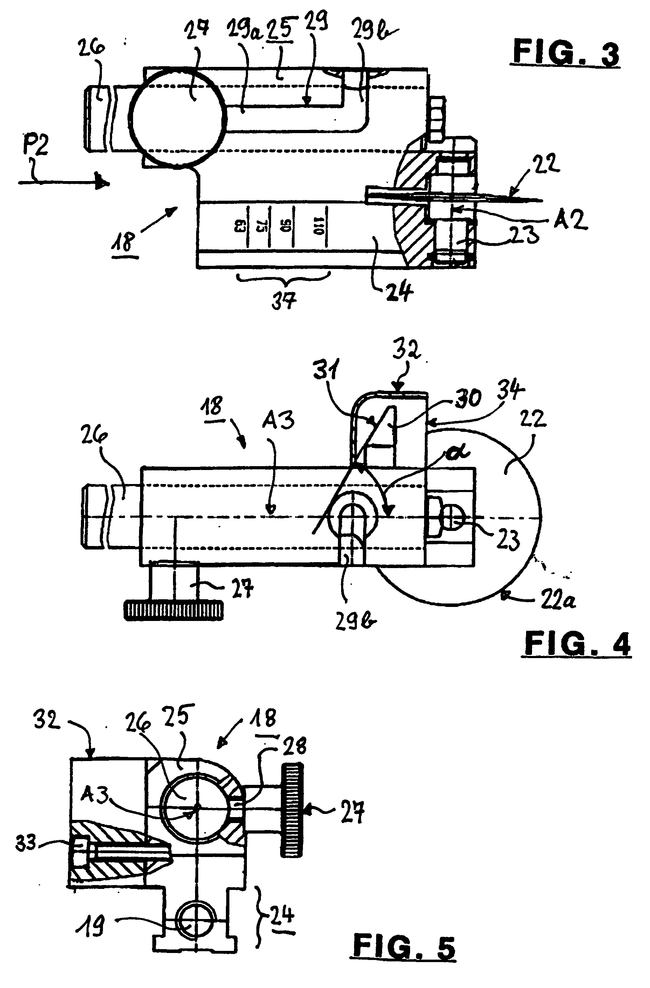

Die Erfindung wird anhand des Werkzeugträgers 18 in den Figuren 3 bis 7 näher erläutert, wobei die Bezugszeichen teilweise auch in die Figuren 1 und 2 übertragen wurden:

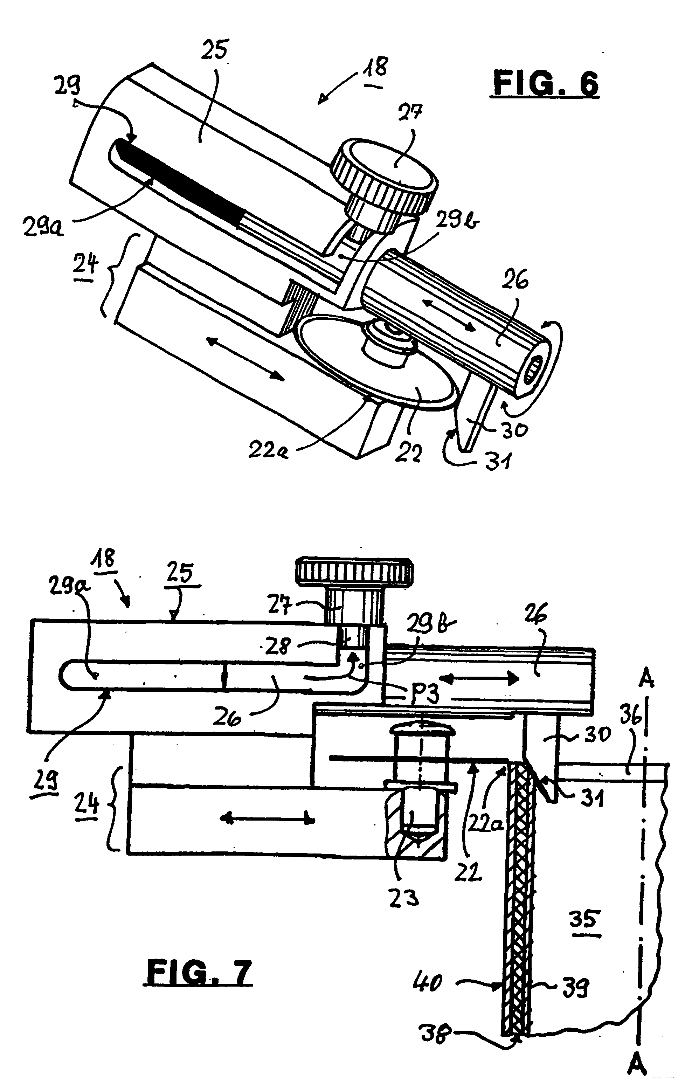

Im Werkzeugträger 18 ist an seinem radial inneren Ende eine Schneidrolle 22 mit einer scharfen Schneidkante 22a mittels eines Lagerzapfens 23 auswechselbar gelagert. Die Hauptebene der Schneidrolle 22 verläuft senkrecht zur Achse A-A, bzw. deren eigene Achse A2 verläuft parallel zur Achse A-A. Der Werkzeugträger 18 besitzt ein im Querschnitt T-förmiges Führungsteil 24, in das die Gewindespindel 19 eingreift (Figur 5). über dem Führungsteil 24 ist eine hierzu parallele weitere Radialführung 25 angeordnet, in der relativ verschiebbar und drehbar ein Führungszapfen 26 gelagert ist. In diesem ist in radialer Ausrichtung eine Stellschraube 27 gelagert, deren Schaft 28 in einer winkelförmigen Kulisse 29 geführt ist.

Der eine - längere - Schenkel 29a dieser Kulisse 29 verläuft parallel zur Radialführung 25, der andere - kürzere - Schenkel 29b rechtwinklig und bogenförmig gekrümmt hierzu bis über die Mitte des Führungszapfens 26, wie dies insbesondere aus den Figuren 4 und 6 und dem Pfeil P3 in Figur 7 ersichtlich ist. Das Ende des Schenkels 29b hat eine solche Lage, daß der beim Anfasen gemäß den Figuren 6 und 7 auftretende Spandruck den Schaft 28 gegen dieses Ende drückt. Damit hat es folgende Bewandtnis:

In der Nähe des radial inneren Endes des Führungszapfens 26 ist ein Anfaswerkzeug 30 mit einer Anfasschneide 31 angeordnet. Das Anfaswerkzeug 30 steht im rechten Winkel zur Achse A3 des Führungszapfens 26 und die Anfasschneide unter einem Winkel α von 60 Grad hierzu. In der eingezogenen Stellung des Führungszapfens gemäß den Figuren 3 und 4 befindet sich das Anfaswerkzeug 30 zum Schutze der Bedienungsperson in einem Schutzgehäuse 32, das seitlich mittels einer Schraube 33 am Werkzeugträger 18 befestigt und in Richtung auf das anzufasende Rohr mit einer Öffnung 34 zum Ausfahren des Anfaswerkzeugs 30 versehen ist.

Die Stellschraube 27 ist gleichzeitig Handgriff und Führungsmittel sowie - durch Anziehen gegen die Radialführung 25 - auch Arretiermittel für den Führungszapfen 26.

Wird nun der Führungszapfen 26 gemäß den Figuren 6 und 7 mittels der Führung des Schaftes 28 der Stellschraube 27 entlang dem Schenkel 29a der Kulisse 29 in Richtung auf die Achse A-A verschoben und am Ende des radialen Weges mittels der Führung des Schaftes 28 der Stellschraube 27 entlang dem Schenkel 29b der Kulisse 29 um die Achse A3 um 90 Grad gedreht, so gelangt das Anfaswerkzeug in seine verriegelte Arbeitsstellung vor die Schneidkante 22a der Schneidrolle 22. Dies ist allerdings erst möglich, wenn die Schneidrolle 22 das überflüssige Rohrteil abgetrennt hat und der Innenquerschnitt des Rohres 35 freiliegt (Figur 7). Durch eine definierte Rückzugsbewegung des Werkzeugträgers 18 zusammen mit dem verriegelten Anfaswerkzeug 30 wird nun im Rohr 35 eine innere Anfasung 36 erzeugt. Um hierfür genau definierte Bezugspunkte zu haben, ist der Werkzeugträger 18 mit einer auf den Nenndurchmesser des Rohres 35 und die Fasenbreite bezogenen Skalierung 37 versehen (Figur 3), die mit einem nicht gezeigten Bezugspunkt an der Radialführung 17 zur Deckung zu bringen ist. Das Anfaswerkzeug kann deswegen um 90 Grad verschwenkt werden, weil seine Anfasschneide 31 die Schneidkante 22a der Schneidrolle 22 übergreift, wie dies in den Figuren 6 und 7 gezeigt ist.

Das Rohr 35 ist ein Verbundrohr mit einem Metallkern 38 (beispielsweise aus Aluminium oder Kupfer), einer Innenbeschichtung 39 und einer Außenbeschichtung 40, jeweils aus einem Kunststoff.

Die Arbeitsweise des Trenngeräts ist folgende: Zunächst wird das Trenngerät 1 mit der Spannvorrichtung 3 um ein vorgegebenes Maß auf das Rohr 35 aufgeschoben und die Spannvorrichtung 3 mittels der Handgriffe 7 und 8 geschlossen. Alsdann wird die Schneidrolle 22 mittels der Radialführung 17 und der Gewindespindel 19 in der Stellung gemäß den Figuren 3 und 4 an der Außenfläche des Rohres 35 zur Anlage gebracht. Danach wird der Drehring 2 mittels des Drehgriffs 20 um die Achse A-A gedreht, wobei der Drehgriff 20 laufend nachgestellt und die Schneidkante 22a der Schneidrolle 22 bis zur Abtrennung der überschüssigen Rohrlänge allmählich durch alle Schichten des Rohres 35 hindurch bewegt wird. Hierbei hält die angezogene Stellschraube 27 das Anfaswerkzeug 30 in der zurückgezogenen Stellung. Der Werkzeugträger 18 wird am Ende dieses Weges angehalten.

Nach Lösen der Stellschraube 27 wird der Führungszapfen 26 relativ zum stillstehenden Werkzeugträger 18 soweit über den Innenquerschnitt des Rohres 35 vorgeschoben, daß die Anfasschneide 31 des Anfaswerkzeugs 30 über dem freien Innenquerschnitt des Rohres 35 liegt. Erst dann wird das Anfaswerkzeug 30 mittels des Führungszapfens 26 und der Kulisse 29 um 90 Grad in den Innenquerschnitt des Rohres 35 hineingeschwenkt und durch die Stellschraube 27 verriegelt. Anschließend wird das Anfaswerkzeug 30 gemäß der Skalierung 37 durch die Gewindespindel 19 gemeinsam mit dem Werkzeugträger 18 um ein vorgegebenes Maß zurückgezogen, bis die innenliegende Anfasung 36 fertiggestellt ist. Nach dem öffnen der Spanvorrichtung 3 wird das Trennwerkzeug 1 von dem angefasten Rohrende abgenommen und das Anfaswerkzeug 30 in sein Schutzgehäuse 32 zurückgeführt.

### Bezugszeichenliste:

- 1: Trenngerät
- 2: Rotationsführung
- 3: Spannvorrichtung
- 4: Halbschale
- 5: Halbschale
- 6: Gelenkzapfen
- 7: Handgriff
- 8: Handgriff
- 9: Gelenkzapfen
- 10: Kniehebel
- 11: Gelenkzapfen
- 12: Gelenkzapfen
- 13: Gewindehülse
- 14: Distanzbolzen
- 15: Führungsring
- 16: Drehring
- 17: Radialführung
- 18: Werkzeugträger
- 19: Gewindespindel
- 20: Drehgriff
- 21: Ausleger
- 22: Schneid rolle
- 22a: Schneidkante
- 23: Lagerzapfen
- 24: Führungsteil
- 25: Radialführung
- 26: Führungszapfen
- 27: Stellschraube
- 28: Schaft
- 29: Kulisse
- 29a: Schenkel
- 29b: Schenkel
- 30: Anfaswerkzeug
- 31: Anfasschneide
- 32: Schutzgehäuse
- 33: Schraube
- 34: öffnung
- 35: Rohr
- 36: Anfasung
- 37: Skalierung
- 38: Metallkern
- 39: Innenbeschichtung
- 40: Außenbeschichtung

- α: Winkel
- A-A: Achse
- A2: Achse
- A3: Achse
- E-E: Ebene
- P1: Pfeil
- P2: Pfeil
- P3: Pfeil

## Patentansprüche

1. Trenngerät für Rohre (35) mit einer Rotationsführung (2) zum Führen des Trenngeräts (1) um die Rohroberfläche und um eine Achse (A-A), mit einer an der Rotationsführung (2) angeordneten Radialführung (17) für einen Werkzeugträger (18), der mit einem Trennwerkzeug (22) und einem Anfaswerkzeug (30) versehen und mittels einer Gewindespindel (19) in Richtung auf die Achse (A-A) und in Gegenrichtung verstellbar ist, **dadurch gekennzeichnet, daß** der Werkzeugträger (18) eine zusätzliche Radialführung (25) für das Anfaswerkzeug (30) besitzt, mit der das Anfaswerkzeug (30) relativ zum Werkzeugträger (18) von einer Stellung außerhalb der Rohroberfläche in eine Stellung innerhalb des Rohres (35) und in Gegenrichtung zum Herstellen einer inneren Anfasung (36) verstellbar ist.

2. Trenngerät nach Anspruch 1, **dadurch gekennzeichnet, daß** die zusätzliche Radialführung (25) einen drehbaren Führungszapfen (26) besitzt, an dem das Anfaswerkzeug (30) radial abstehend befestigt ist und der eine Stellschraube (27) für die Führung und Arretierung des Führungszapfens (26) gegenüber der Radialführung (25) aufweist, und daß die Radialführung (25) eine Kulisse (29) für die Führung der Stellschraube (27) in radialer Richtung und in Umfangsrichtung aufweist.

3. Trenngerät nach Anspruch 2, **dadurch gekennzeichnet, daß** die Kulisse (29) zwei Schenkel (29a, 29b) aufweist, von denen der erste Schenkel (29a) parallel zur Verschieberichtung des Führungzapfens (26) und der zweite Schenkel (29b) rechtwinklig und bogenförmig gekrümmt zum ersten Schenkel (29a) verläuft und an einer Stelle angeordnet ist, an der das Anfaswerkzeug (30) in den offenen lichten Rohrquerschnitt einschwenkbar ist.

4. Trenngerät nach Anspruch 1, **dadurch gekennzeichnet, daß** das Trennwerkzeug als Schneidrolle (22) mit einer Schneidkante (22a) ausgebildet ist und daß das Anfaswerkzeug (30) in ausgeschwenkter Stellung über die Schneidrolle (22) vorschiebbar und zurückziehbar ist und in radial einwärts vorgeschobener und in den offenen Rohrquerschnitt eingeschwenkter Stellung die Schneidkante (22a) übergreift.

5. Trenngerät nach Anspruch 1, **dadurch gekennzeichnet, daß** am Werkzeugträger (18) ein Schutzgehäuse (32) befestigt ist, in das das Anfaswerkzeug (30) zurückziehbar ist.

6. Trenngerät nach Anspruch 1, **dadurch gekennzeichnet, daß** der Werkzeugträger (18) einen Führungsteil (24) besitzt, mit dem der Werkzeugträger in der hierzu komplementären Radialführung (17) geführt ist.

7. Trenngerät nach Anspruch 6, **dadurch gekennzeichnet, daß** der Führungsteil (24) T-förmig ausgebildet ist.

8. Trenngerät nach Anspruch 1, **dadurch gekennzeichnet, daß** die Rückzugsbewegung des gegenüber dem Werkzeugträger (18) arretierten Anfaswerkzeugs (30) beim Anfasen mittels der Gewindespindel (19) für den Antrieb des Werkzeugträgers (18) herbeiführbar ist.

9. Trenngerät nach Anspruch 1, **dadurch gekennzeichnet, daß** zwischen dem Werkzeugträger (18) und seiner Radialführung (17) eine Skalierung (37) und ein Bezugspunkt angeordnet sind, durch die eine Vorgabe der Rohrdurchmesser und der Breite der Anfasung (36) herbeiführbar ist.

## Claims

1. Separating apparatus for pipes (35) with a rotary guide (2) for guiding the separating apparatus (1) around the pipe surface and around an axis (A-A), comprising a radial guide (17), which is arranged on the rotary guide (2), for a tool support (18) which is provided with a separating tool (22) and a chamfering tool (30) and adjustable by means of a threaded spindle (19) in the direction around the axis (A-A) and in the opposite direction, **characterised in that** the tool support (18) includes an additional radial guide (25) for the chamfering tool (30) by means of which the chamfering tool (30) is adjustable relative to the tool support (18) from a position outside the pipe surface into a position within the pipe (35) and in the opposite direction for producing inner chamfering (36).

2. Separating apparatus according to Claim 1, **characterised in that** the additional radial guide (25) includes both a rotary guide pin (26) onto which the chamfering tool (30) is mounted in a radially protruding manner and an adjusting screw (27) for guiding and arresting the guide pin (26) relative to the radial guide (25), and the radial guide (25) comprises a link (29) for guiding the adjusting screw (27) in the radial direction and in the peripheral direction.

3. Separating apparatus according to Claim 2, **characterised in that** the link (29) comprises two shanks (29a, 29b) of which the first shank (29a) extends parallel to the displacement direction of the guide pin (26) and the second shank (29b) extends rectangularly and arcshaped curved relative to the first shank (29a) and is arranged at a point where the chamfering tool (30) can be pivoted into the open clear pipe cross-section.

4. Separating tool according to Claim 1, **characterised in that** the separating tool is designed as a cutting roller (22) with a cutting edge (22a), and the chamfering tool (30) in its extended position can be pushed forward over the cutting roller (22) and retracted, and in a radially inwardly extended position and when pivoted into the open pipe cross-section reaches over the cutting edge (22a).

5. Separating apparatus according to Claim 1, **characterised in that** onto the tool support (18) is mounted a protective casing (32) into which the chamfering tool (30) can be retracted.

6. Separating apparatus according to Claim 1, **characterised in that** the tool support (18) includes a guide element (24) by means of which the tool support is guided in the thereto complementary radial guide (17).

7. Separating apparatus according to Claim 6, **characterised in that** the guide element (24) is of T-shaped design.

8. Separating element according to Claim 1, **characterised in that** the retracting movement of the chamfering tool (30), which is arrested relative to the tool support (18), can be introduced during chamfering by means of the threaded spindle (19) for driving the tool support (18).

9. Separating apparatus according to Claim 1, **characterised in that** between the tool support (18) and its radial guide (17) is arranged a scale (37) and a reference point by means of which the pipe diameter and the width of chamfering (36) can be set.

## Revendications

1. Appareil de sectionnement pour des tubes (35) comportant un système de guidage en rotation (2) pour guider l'appareil de sectionnement (1) autour de la surface du tube et autour d'un axe (A-A), comportant un système de guidage radial (17) pour un porte-outil (18), qui est équipé d'un outil de sectionnement (22) et d'un outil de biseautage (30), et au moins une broche filetée (19) déplaçable dans une direction de l'axe (A-A) et dans une direction opposée, **caractérisé en ce que** le porte-outil (18) possède un système supplémentaire de guidage radial (25) pour l'outil de biseautage (30), à l'aide duquel l'outil de biseautage (30) est déplaçable par rapport au porte-outil (18) depuis une position située à l'extérieur de la surface du tube pour venir dans une position à l'intérieur du tube (35) et en sens opposé pour la formation d'un biseau interne (36).

2. Appareil de sectionnement selon la revendication 1, **caractérisé en ce que** le système supplémentaire de guidage (21) comporte un embout de guidage rotatif (26), sur lequel l'outil de biseautage (30) est fixé de manière à faire saillie radialement et comporte une vis de réglage (27) pour le guidage et le blocage du téton de guidage (26) par rapport au système de guidage radial (25), et que le système de guidage radial (25) comporte une coulisse (29) pour le guidage de la vis de réglage (27) dans une direction radiale et dans la direction circonférentielle.

3. Appareil de sectionnement selon la revendication 2, **caractérisé en ce que** la coulisse (29) comporte deux branches (29a, 29b), parmi lesquelles la première branche (29a) s'étend parallèlement à la direction de déplacement de l'embout de guidage (26) et la seconde branche (29b) s'étend à angle droit et avec une forme cintrée en arc de cercle par rapport à la première branche (29a) et est disposée en un emplacement, dans lequel l'outil de biseautage (30) peut être amené par pivotement dans la section transversale libre ouverte du tube.

4. Appareil de sectionnement selon la revendication 1, **caractérisé en ce que** l'outil de sectionnement est agencé sous la forme d'un rouleau de coupe (22) comportant une arête de coupe (22a) et que l'outil de biseautage (30) peut être agencé et rétracté dans une position écartée par pivotement au-dessous du rouleau de coupe (22) et s'engager au-dessus de l'arête de coupe (22a), dans une position avancée radialement vers l'intérieur et rentrée par pivotement dans la section transversale ouverture du tube.

5. Appareil de sectionnement selon la revendication 1, **caractérisé en ce que** sur le porte-outil (18) est fixé un boîtier de protection (32), dans lequel l'outil de biseautage (30) peut être rétracté.

6. Appareil de sectionnement selon la revendication 1, **caractérisé en ce que** le porte-outil (18) comporte une partie de guidage (24), avec laquelle le porte-outil est guidé dans le système de guidage radial (17) qui en est complémentaire.

7. Appareil de sectionnement selon la revendication 6, **caractérisé en ce que** la partie de guidage (24) est agencée en forme de T.

8. Appareil de sectionnement selon la revendication 1, **caractérisé en ce que** le mouvement de retrait de l'outil de biseautage (30) bloqué par rapport au porte-outil (18) peut être exécuté lors du biseautage au moyen de la broche filetée (19) pour l'entraînement du porte-outil (18).

9. Appareil de sectionnement selon la revendication 1, **caractérisé en ce qu'**entre le porte-outil (18) et son système de guidage radial (17) sont disposés un système de réglage d'échelle (37) et un point de référence, à l'aide desquels on peut réaliser une prédétermination du diamètre du tube et de la largeur du biseau (36).
